# NEW EUROPEAN PATENT SPECIFICATION

(11) **EP 1 740 670 B2**
(45) Date of publication and mention of the opposition decision: **12.10.2016**
(45) Mention of the grant of the patent: 23.05.2012
(21) Application number: 04822009.9
(22) Date of filing: 20.04.2004
(51) Int. Cl.: C09J 189/00, C09J 197/00, C08L 97/02, B27N 3/00

(54) **FORMALDEHYDE-FREE LIGNOCELLULOSIC ADHESIVES AND COMPOSITES MADE FROM THE ADHESIVES**
FORMALDEHYDFREIE LIGNOCELLULOSISCHE KLEBSTOFFE UND DARAUS HERGESTELLTE VERBUNDSTOFFE
ADHÉSIFS LIGNO CELLULOSIQUES LIBRES DE FORMALDÉHYDE ET COMPOSITES CONSTITUÉS À PARTIR DES ADHÉSIFS

(43) Date of publication of application: 10.01.2007
(73) Proprietor: Oregon State University, Corvallis, Oregon 97331 (US)
(72) Inventor: LI, Kaichang, Corvallis, OR 97330 (US)
(74) Representative: Stainthorpe, Vanessa Juliet
(86) International application number: PCT/US2004/012307
(87) International publication number: WO 2005/113700

(56) References cited:
- DE-A- 19 843 493
- US-A- 2 882 250
- US-A- 3 494 775
- US-A- 4 675 351
- US-A1- 2004 037 906
- US-A1- 2004 089 418
- US-B1- 6 339 116

## Description

### Field

The present disclosure relates to adhesives for making lignocellulosic composites.

### Background

Lignocellulosic-based composites are formed from small dimension pieces of cellulosic material that are bonded with an adhesive (i.e., a binder). In general, solid wood is fragmented into smaller pieces such as strands, fibers, and chips. An adhesive composition then is added to the wood component. The resulting mixture is subj ected to heat and pressure resulting in a composite. The adhesive mix typically is the only non-lignocellulosic component.

The most commonly used wood adhesives are phenol-formaldehyde resins (PF) and urea-formaldehyde resins (UF). There are at least two concerns with PF and UF resins. First, volatile organic compounds (VOC) are generated during the manufacture and use of lignocellulosic-based composites. An increasing concern about the effect of emissive VOC, especially formaldehyde, on human health has prompted a need for more environmentally acceptable adhesives. Second, PF and UF resins are made from petroleum-derived products. The reserves of petroleum are naturally limited. The wood composite industry would greatly benefit from the development of formaldehyde-free adhesives made from renewable natural resources.

Soy protein was used as a wood adhesive for the production of plywood from the 1930's to the 1960's. Petroleum-derived adhesives replaced soy protein adhesives due to the relatively low bonding strength and water resistance of soy protein adhesives. However, soy protein is an inexpensive, abundant, renewable material that is environmentally acceptable.

### Summary of the Disclosure

The invention is defined in the appended claims.

Disclosed herein are methods for making lignocellulosic composites by adhering lignocellulosic substrates together. A first variant of the method involves using a substantially formaldehyde-free adhesive composition that comprises a reaction product of (i) soy flour and (ii) at least one substantially formaldehyde-free curing agent comprising a resin comprising an adduct of an epoxide with a polyamine resin, a polyamidoamine resin or a polyamide resin. A second variant of the method involves using a composite that comprises (a) at least two lignocellulosic substrates, and (b) a substantially formaldehyde-free adhesive composition comprising a reaction product of (i) soy flour and (ii) at least one substantially formaldehyde-free curing agent comprising a resin comprising an adduct of an epoxide with a polyamine resin, a polyamidoamine resin or a polyamide resin, wherein the adhesive composition bonds the lignocellulosic substrates together.

### Brief Description of the Drawings

Certain embodiments will be described in more detail with reference to the following drawing:
FIG. 1 is a graph depicting the lap-shear strengths of examples of the presently described adhesive compositions and prior art adhesive compositions.
FIGS. 2-7 are graphs depicting the shear strengths of examples of the presently described adhesive compositions.

### Detailed Description of Several Embodiments

For ease of understanding, the following term used herein is described below in more detail:

US 3 494 775 discloses a protein adhesive coating composition containing an amine-epichlorohydrin condensate latent insolubilising agent with or without pigment. The composition yields water-resistant films when applied to a substrate and heated briefly at moderated temperature. Suitable substrates are for example paperboard or paper.

US 2004/0037906 discloses an adhesive composition obtained by reacting a soy protein which may be soy flour with at least one compound, thereby introducing amino or imino functional groups into the soy protein structure. Lignocellulosic composites are produced by mixing the adhesive composition with lignocellulosic particles or fibres. The adhesive and the lignocellulosic composite are free of formaldehyde.

"Lignin" generally refers to a group of phenolic polymers that confer strength and rigidity to plant material. Lignins are very complex polymers with many random couplings, and thus tend to be referred to in more generic terms. Lignins may include, for instance, analytical lignin preparations such as Brauns lignin, cellulolytic enzyme lignin, dioxane acidolysis lignin, milled wood lignin, Klason lignin, and periodate lignin, and industrial lignin preparations such as kraft lignin and lignosulfonates.

The above term description is provided solely to aid the reader, and should not be construed to have a scope less than that understood by a person of ordinary skill in the art or as limiting the scope of the appended claims.

The adhesive composition can be made by reacting a soy flour with at least one adhesion promoter. A mixture of soy flour and lignin may be employed. In a first variant, the soy flour is reacted with a substantially formaldehyde-free compound that may provide both curing for the adhesive composition and adhesion to the lignocellulosic substrate. In other words, the substantially formaldehyde-free compound is a difunctional adhesion promoter in the sense that one compound can provide dual functions. In a second variant, the soy flour is reacted with two different adhesion promoters. The first adhesion promoter modifies the soy protein by introducing additional nitrogen-containing functional groups at internal, terminal and/or pendant positions of the soy protein structure resulting in an amino and/or imino-augmented protein. The second adhesion promoter is a curing agent. Both the first and second variants of the adhesive composition typically are provided as a two-part system in which the soy flour comprises one part or package and the curing agent (i.e., the difunctional adhesion promoter in the first variant or the distinct curing agent in the second variant) comprises the second part or package. In both the first and second variants, all the parts or components of the composition may be in the form of aqueous solutions or dispersions. Thus, volatile organic solvents as carrier fluids can be avoided. These two variants are described in more detail below.

The soy protein may have been pretreated to obtain a material that is soluble or dispersible in water as is known in the art.

Soybeans contain about 38 weight percent protein with the remaining portion comprising carbohydrates, oils and moisture. Soybeans are processed to increase the amount of soy protein in the processed product. Soy flour includes approximately 50 weight percent protein. The soy flour may be prepared for use in the adhesive compositions in any manner. Typically, the soy flour is included in a carrier or delivery liquid such as water or similar solvent. In particular, the soy flour may be dissolved in water and the resulting aqueous solution mixed with the adhesion promoter(s). The aqueous adhesive solution may be prepared, for example, by initially mixing the soy flour in water and adjusting the pH of the mixture to the desired range. When the soy flour is mixed with a difunctional adhesion promoter, the pH of the soy flour part should be sufficiently alkaline so that the resulting protein/difunctional adhesion promoter mixture is non-acidic or, more particularly, alkaline. For example, the pH of the soy flour part may be about 7 to about 11 resulting in a pH of greater than 6 and up to about 10 for the combined two-part mixture. The pH may be adjusted by adding basic substances such as, for example, alkali metal hydroxides, ammonium hydroxide, amines or pyridine. The amount of soy flour dissolved in the water may be adjusted to provide the desired solids content for the soy flour part of the two part system. The soy flour solids content may be, for example, from about 10 to about 60 weight percent. The soy flour solution may be freeze-dried at this stage of formulation or it may remain as a liquid solution. If the soy flour solution is freeze-dried, water (or the appropriate carrier fluid) is simply added to the freeze-dried substance prior to use. Freeze-drying reduces the costs of transporting the adhesive. The adhesion promoter(s) is mixed with the aqueous soy protein solution to form the final adhesive composition that is applied to the wood substrate.

Although not bound by any theory, as mentioned above, it is believed that the molecular structure of the difunctional adhesion promoter includes (1) a reactive site that can cure the adhesive composition and (2) a reactive site that provides adhesion to the lignocellulosic substrate. The cure reactive site and the adhesion reactive site may be located at the same site on the difunctional adhesion promoter. In the other words, a first portion of the available reactive sites on a difunctional adhesion promoter molecule may react with other difunctional adhesion promoter molecules or react with the functional groups (especially carboxylic acid and amino) of the soy protein. A second portion of the available reactive sites on a difunctional adhesion promoter molecule may form covalent and/or hydrogen bonds with the lignocellulosic substrate.

Examples of suitable difunctional adhesion promoter compounds include adducts of epoxides with polyamine resins, polyamidoamines resins, or polyamide resins. Such resins typically are made from glycidylether or epichlorohydrin condensates of polyalkylene polyamines and are used as wet-strength agents for paper. The resins may be water-soluble or water-dispersible. These resins typically include a nitrogen-containing heterocyclic functional group that is the reactive site for covalently bonding to protein functional groups, covalently bonding to nitrogen-containing heterocyclic functional groups of other resin molecules, and covalently bonding to carboxylic acid and/or hydroxyl groups in the lignocellulosic substrate.

Illustrative commercially-available adducts of epoxides with polyamine resins, polyamidoamines resins, or polyamide resins include Kymene® resins available from Hercules Inc., Rezosol resins available from Houghton, Cascamid resins available from Borden, and Amres® resins available from Georgia-Pacific Corporation. Kymene® 557H resins are one specific example that is based on the reaction product of poly(adipic acid-co-diethylenetriamine) and epichlorohydrin. Kymene® 557H resins are believed to have a structure that includes a nitrogen-containing, 4-member ring, functional group as shown below:

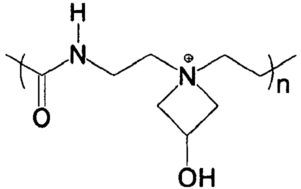

An excess of epichlorohydrin is used to control the rate of crosslinking during the manufacturing process and to aid in storage stability. Such compositions and processes for their manufacture are disclosed, for example, in U.S. Patent Nos. 2,926,116 and 2,926,154.

Another approach for providing the desired curing and amine, amide, imine, or imide functional groups involves initially modifying the soy protein structure so that it includes additional amine, amide, imine, or imide functional groups and subsequently curing the modified soy protein. The term "additional" amine, amide, imine, or imide functional groups indicates that the resulting modified soy protein (i.e., the soy protein residue) includes an additional number of covalently bonded amine, amide, imine, or imide functional groups beyond those already existing in the unmodified soy protein structure. In particular, additional amide, amine, imide and/or imine groups are introduced in internal, terminal and/or pendant positions in the soy protein residue structure. The first step includes reacting the soy flour with a first compound that can introduce amine, amide, imine, or imide functional groups into the soy protein structure. The curing involves reacting the resulting modified soy flour with a second compound that can cure the modified soy flour. The modified soy flour can be provided as the first part of the adhesive system and the second compound (i.e., curing agent) can be provided as the second part of the adhesive system.

The soy flour modifying step includes reacting the soy flour withy a nitrogen-donating compound under conditions sufficient for covalently bonding at least one amine, amide, imine, or imide group to the soy protein structure. According to illustrative examples, the nitrogen-donating compound reacts with the carboxylic acid, amide and/or hydroxyl groups of the soy protein. The reaction conditions may vary depending upon the nitrogen-donating compound, but in general the reaction temperature may range from about 4 to about 200°C. The pH may range from about 3 to about 11. Catalysts may include basic substances such as alkali metal hydroxides, ammonium hydroxide, amines, and pyridine and enzymes such as transglutaminases and lipases. The molar reactant ratio of the soy protein to the nitrogen-containing compound may range from 1:10 to 1:5000.

Illustrative nitrogen-donating compounds include alkyl amines (e.g., 1,3-diaminopropane, 1,6-hexanediamine, ethylene diamine, diethylenetriamine), unsaturated hydrocarbon amines (e.g., allylamine), hydroxyl amines (e.g.,ethanolamine, hydroxylamine), amidines (e.g., melamine), imines (e.g., polyethyleneimine), amino acids (e.g., 4-aminobutyric acid, 6-aminocaprioc acid), polyamines, polyimine, polyamides, and mixtures thereof. The nitrogen-donating compound may be water-soluble or water-dispersible.

As mentioned above, the adhesive composition typically is utilized as a two-part system in which the soy flour (either modified or unmodified) comprises one part and the curing agent comprises the second part. The curing agent may be the above-described difunctional adhesion promoter in the first variant or the second compound in the second variant. Illustrative curing agents for the second variant include epoxides (e.g., epichlorohydrin), alkanols (e.g., 1,3-dichloropropan-2-ol), aldehydes (e.g., glyoxal, polymeric dialdehydes such as oxidized starch and dialdehyde starch, and glutaric dialdehyde) and mixtures thereof. The curing agent may be water-soluble or water-dispersible. The two parts are mixed together a short time prior to use. The composition may have an open time of up to about 9 or 10 hours. As used herein, "open time" denotes the time from mixing of the two parts to the time at which the mixed composition cures to a point that it is no longer workable.

The relative amount of soy protein mixed with the curing agent may range depending, for example, upon the number of available reactive sites and the molecular weight of the curing agent. For example, the mix ratio of soy flour to curing agent may range from about 1:1 to about 1000:1, more particularly from about 1:1 to about 100:1, based on dry weight. The soy flour and the curing agent may be mixed together at standard temperature and pressure (i.e., about 25°C and about 1 atmosphere). The solids content of the resulting final adhesive mixture may be from about 10 to about 60, more particularly from about 20 to about 60 weight percent. Each (or only one) part of the adhesive system could be provided to the end user in the form of a concentrate that is diluted by the end user to the appropriate mix ratios and solid contents.

The adhesive composition may also include additives and fillers found in lignocellulosic adhesives such as bactericides, insecticides, silica, wheat flour, tree bark flour, nut shell flour and the like.

The adhesive compositions are heat-curable. In other words, heating the two part adhesive mixture forms covalent bonds between the individual molecules of the adhesive composition and covalent and hydrogen bonds between molecules of the adhesive mixture and the lignocellulosic particles. Such curing typically occurs during the hot pressing step of the composite formation. Thus, the cure temperature of the adhesive composition is tailored so that it coincides with the heating temperatures used in composite formation. Such cure temperatures may range, for example, from about 100 to about 200°C, more particularly from about 120 to about 170°C.

Lignocellulosic composites that can be produced with the adhesives described herein include particleboard, oriented strand board (OSB), waferboard, fiberboard (including medium-density and high-density fiberboard), parallel strand lumber (PSL), laminated strand lumber (LSL), and similar products. In general, these composites are made by first blending comminuted lignocellulosic materials with an adhesive that serves as a binder that adheres the comminuted lignocellulosic materials into a unitary densified mass. Examples of suitable lignocellulosic materials include wood, straw (including rice, wheat and barley), flax, hemp and bagasse. The comminuted lignocellulosic materials can be in any processed form such as chips, flakes, fibers, strands, wafers, trim, shavings, sawdust, straw, stalks and shives. The resultant mixture is formed into the desired configuration such as a mat, and then processed, usually under pressure and with heat, into the final product. Processes are generally carried out at temperatures of from about 120 to 225°C in the presence of varying amounts of steam, generated by liberation of entrained moisture from the lignocellulose materials. Thus, the moisture content of the lignocellulose material may be between about 2 and about 20 percent by weight, before it is blended with the adhesive.

The amount of adhesive mixed with the lignocellulosic particles may vary depending, for example, upon the desired composite type, lignocellulosic material type and amount and particular adhesive composition. In general, about 1 to about 12, more particularly about 3 to about 10, weight percent adhesive may be mixed with the lignocellulosic material, based on the total combined weight of adhesive and lignocellulosic material. The mixed adhesive composition may be added to the comminuted lignocellulosic particles by spraying or similar techniques while the lignocellulosic particles are tumbled or agitated in a blender or similar mixer. For example, a stream of the comminuted lignocellulosic particles may be intermixed with a stream of the mixed adhesive composition and then be subj ected to mechanical agitation.

The adhesive compositions also may be used to produce plywood or laminated veneer lumber (LVL). The adhesive composition may be applied onto veneer surfaces by roll coating, knife coating, curtain coating, or spraying. A plurality of veneers are then laid-up to form sheets of required thickness. The mats or sheets are then placed in a heated press (e.g., a platen) and compressed to effect consolidation and curing of the materials into a board. Fiberboard may be made by the wet felted/wet pressed method, the dry felted/dry pressed method, or the wet felted/dry pressed method.

The presently disclosed adhesives provide a strong bond between the lignocellulosic particles or fractions. The adhesives also provide structural composites with high mechanical strength. In addition, the adhesive compositions are substantially free of formaldehyde (including any compounds that may degenerate to form formaldehyde). For example, the adhesive compositions do not contain any formaldehyde (and formaldehyde-generating compounds) that is detectable by conventional methods or, alternatively, the amount of formaldehyde (and formaldehyde-generating compounds) is negligible from an environmental and workplace regulatory standpoint.

The specific examples described below are for illustrative purposes and do not form part of the claimed invention and should not be considered as limiting the scope of the appended claims.

### Example 1 - Preparation of Alkali-modified Soy Protein Isolate

SPI powder (30 g) was mixed with 400ml of distilled water at room temperature and then stirred for 120 minutes. The pH value of the mixture was then adjusted to 10 using sodium hydroxide (1 M). The mixture was subsequently mixed in a shaker at 50°C and 180 rpm for 120 minutes. The mixture was then concentrated to 2/3 of the original volume via membrane concentration (membrane had a 10 kDa molecular weight restriction), and freeze-dried.

### Example 2 - Preparation of Wood Protein Adhesive Mixture

The alkali-modified SPI from Example 1 (5 g) was added to 30 ml of an aminopolyamide-epichlorohydrin resin (Kymene® 557H available from Hercules Inc.) and then stirred at room temperature. The resulting aqueous solution was used as an adhesive for maple veneers as described below.

### Example 3 - Preparation and Testing Wood Composites

Adhesive mixtures prepared as described in Example 2, Kymene® 557H resin alone, and a phenol-formaldehyde (PF) adhesive mix commercially available from Georgia-Pacific were evaluated for their ability to bond together two pieces of maple veneer. The bonding area was 1 cm². The adhesive preparation for testing was applied to one side and the end of a maple veneer strip (1 cm x 10 cm). Two pieces of maple veneer strips were stacked together and hot-pressed at 250°F for 5 minutes. The applied pressure was 200 psi. The lap-shear strength was measured with an Instron machine.

Water resistance of the adhesive composition (for use in composites that might be exposed to water) was also tested. The wood composite specimens obtained as described above were soaked in water at room temperature for 48 hours and then dried at room temperature in a fume hood for 48 hours. Soaking and drying cycles were repeated three times and any delamination of the specimen (i.e., delamination without applying an external force) was recorded after each cycle. No delamination occurred with any of the specimens

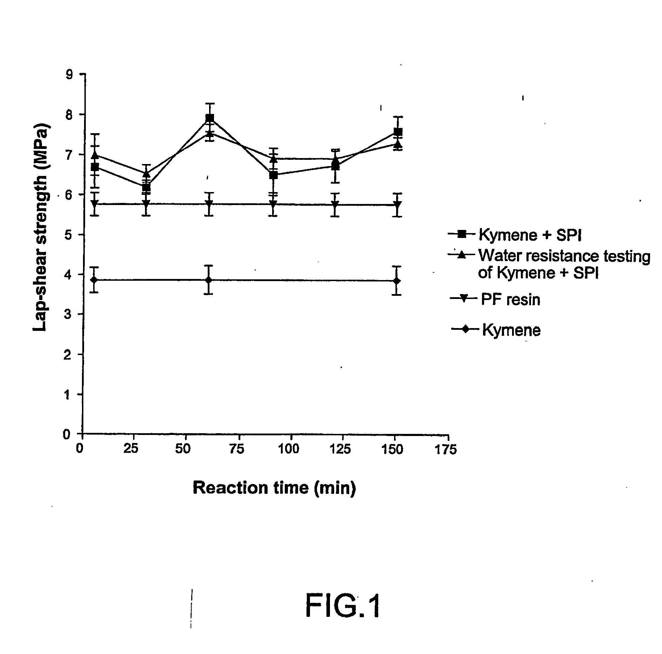

The lap-shear strength results are shown in FIG. 1. In all instances the SPI/Kymene® 557H adhesive provided greater lap-shear strength compared to the PF adhesive and to Kymene® 557H alone. Most surprisingly, no delamination was found on any of the SPI/Kymene® 557H-bonded composites and the adhesive strength did not decrease after the specimens were subjected to the water-soaking/drying test (the water resistance results shown in FIG. 1 are after one soaking/drying cycle). All the specimens bonded with the SPI/Kymene® 557H adhesive exhibited 100 percent wood failure rather than glue line failure, but specimens bonded with the PF adhesive or Kymene® 557H alone did not exhibit 100 percent wood failure. FIG. 1 also depicts the effect of the reaction time between Kymene® 557H and SPI (see the x-axis in the FIG. 1 graph) on the lap-shear strength. The reaction time is the time from initial mixing of the Kymene® 557H and SPI to the time the mixture was applied to the veneer. The lap-shear strengths at all tested times were higher than that of the PF adhesive. A mixture of Kymene® 557H and SPI that was not alkali modified (reaction time of 150 minutes) yielded a lap-shear strength of about 7.3 MPa. The data shown in FIG. 1 is the average of 13 individual specimens at each test point and the error bar represents the standard deviation.

In addition, the glue line for the SPI/Kymene® 557H adhesive is very light in color. In contrast, commercially available PF adhesives resulted in dark color glue lines that are problematic in the appearance of certain wood composite products.

### Example 4 - Preparation of Lignin Solution

Kraft lignin powder (20 g) was dissolved in 100 ml water and the pH value of the lignin solution was adjusted to 10.0 ~ 10.5 with 1 N NaOH solution. The solids content of the lignin solution was measured as 17.0 percent. The lignin stock solution was used for preparing adhesives as described below.

### Example 5 - Effect of Mixing Time for Preparing Adhesives

A lignin stock solution (10 g, i.e., 1.7 g oven-dry solids) prepared according to Example 4 was mixed with Kymene® 557H (2.72 g, i.e., 0.34 g oven-dry solids) for various times ranging from 10 to 180 minutes. The resulting adhesive had a 16 weight percent solids content. The adhesive at each mixing time was brushed onto the ends of two maple veneer strips (7.6 x 17.8 cm) with the grain of the strips being parallel to the longitudinal direction. The brushed area on each veneer was 1 x 17.8 cm. The two adhesive-coated veneer strips were lapped together and hot-pressed at 277 psi and 120°C for 5 minutes. The resulting two-ply wood composite panels were stored overnight at room temperature before the evaluation of their shear strength.

The dry shear strength was determined by cutting each two-ply wood composite panels into six specimens with each specimen having a bonding area of 1 x 2.54 cm. The shear strength was measured by an Instron machine at 1 mm/minute of crosshead speed. The maximum shear strength at breakage between two pieces of maple veneer strips was recorded as dry shear strength.

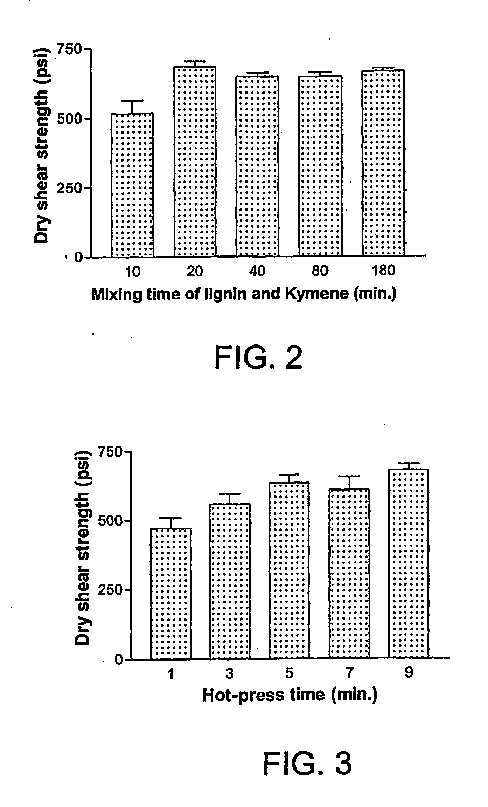

The results are shown in FIG. 2. Data are the mean of six replicates and the error bar represents one standard deviation.

### Example 6 - Effect of Hot Press Conditions on Shear Strength

A lignin stock solution (10 g, 1.7 g oven-dry solids) prepared according to Example 4 was mixed with Kymene® 557H (2.72 g, i.e., 0.34 g oven-dry solids) for 25 minutes. The resulting adhesive was applied to two pieces of veneer strips as described in Example 5. For determination of the effects of hot-press time on shear strength, the two adhesive-coated veneer strips were lapped together and hot-pressed at 277 psi and 120°C for various times, ranging from 1 to 9 minutes. For determination of the effects of hot-press temperature on shear strength, the two adhesive-coated veneer strips were lapped together and hot-pressed at 277 psi for 5 minutes at 100°C, 120°C, 140°C, and 160°C, respectively. The resulting two-ply wood composite panels were stored overnight at room temperature before the evaluation of shear strength.

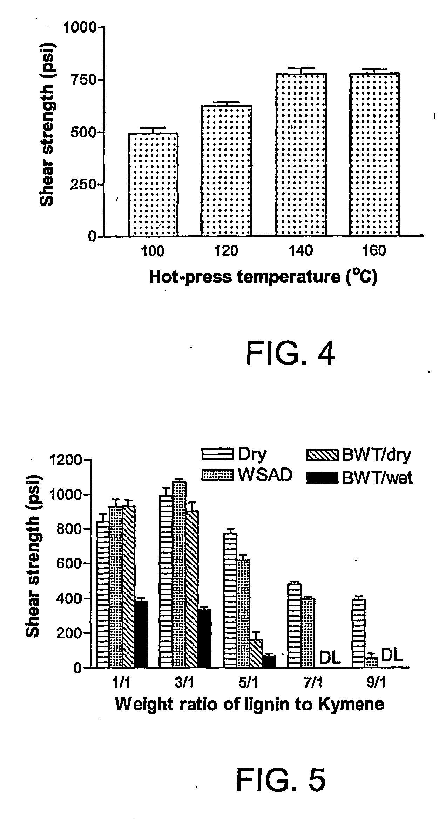

The dry shear strength results are shown in FIGS. 3 and 4. Data are the mean of six replicates and the error bar represents one standard deviation. When the hot-press time increased from 1 minute to 5 minutes, the shear strength of the wood composites also increased (FIG. 3). Further extension of hot-press time from 5 minutes to 9 minutes did not result in significant increases in shear strength. The shear strength significantly increased when the hot-press temperature increased from 100°C to 140°C (FIG. 4). However, no further increase of the shear strength was found when the temperature increased from 140°C to 160°C.

### Example 7 - Effect of Weight Ratio of Lignin to Curing Agent

A lignin stock solution (10 g, i.e., 1.7 g oven-dry solids) prepared according to Example 4 was separately mixed with Kymene® 557H for 25 minutes with a weight ratio of lignin to Kymene® 557H ranging from 1:1 to 9:1. The total solids content of the resulting adhesives was kept at 16 percent. Each adhesive was brushed on two pieces of veneer strips as described in Example 5. The two adhesive-coated veneer strips were lapped together and hot-pressed at 277 psi and 140°C for 5 minutes. Four two-ply wood composite panels were prepared with each adhesive. All two-ply wood composite panels were stored overnight at room temperature before the evaluation of their dry shear strength and water resistance.

The two-ply wood composite specimens bonded with the adhesives were subjected to a water-soaking-and-drying (WSAD) test and a boiling-water test (BWT). For a WSAD test, the specimens were soaked in water at room temperature for 24 hours, dried in a fume hood at room temperature for 24 hours, and then evaluated for the shear strength. A BWT was performed according to the U. S. Voluntary Product Standard PS 1-95 for Construction and Industrial Plywood (published by the U. S. Department of Commerce through APA-The Engineered Wood Association, Tacoma, WA). The specimens were boiled in water for 4 hours, dried for 24 hours at 63 ± 3°C, boiled in water again for 4 hours, and then cooled down with tap water. While the specimens were still wet, shear strength was evaluated and defined as BWT/wet strength. Shear strength was also measured after the specimens had been dried at room temperature in a fume hood for 24 hours and this strength was defined as BWT/dry strength.

The 3:1 weight ratio of lignin to curing agent resulted in the highest dry shear strength and the highest shear strength after the wood composites underwent a WSAD cycle (FIG. 5). The BWT/dry shear strength at the 3:1 weight ratio was comparable to that at the 1:1 weight ratio. The BWT/wet shear strength at the 3:1 1 ratio was slightly lower than that at the 1:1 weight ratio. When the weight ratio of lignin to curing agent increased from 3:1 to 5:1, all corresponding shear strengths decreased (FIG. 5). The wood composites bonded with adhesives delaminated during a BWT when the weight ratio of lignin to curing agent was 7:1 or higher.

### Example 8 - Effect of Total Solids Content

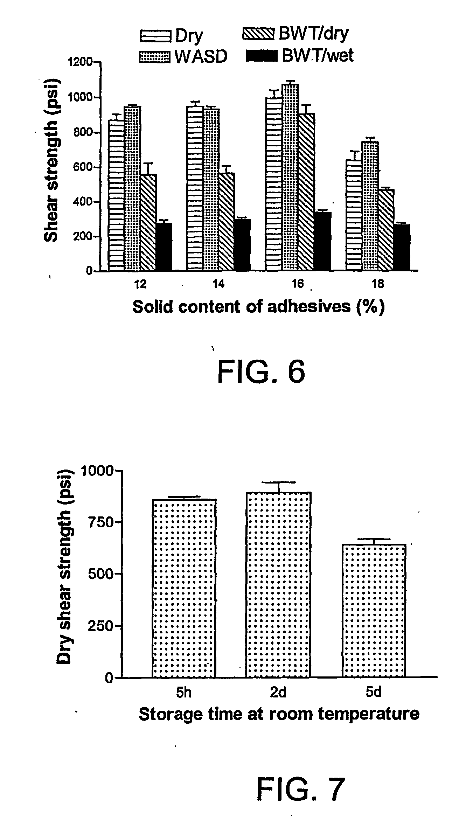

The lignin stock solution prepared according to Example 4 was first concentrated to 21.8 % total solids content. The concentrated lignin stock solution (5 g, i.e., 1.09 g oven-dry solids) was diluted with de-ionized water of 4.23 g, 2.48 g, 1.18 g, and 0.17 g for 12 percent, 14 percent, 16 percent, and 18 percent total solids content, respectively. Each diluted lignin solution was mixed with Kymene® 557H (2.91 g, i.e., 0.36 g oven-dry solids) for 25 minutes. Each adhesive was brushed onto the end of two veneer strips as described in Example 5. The two adhesive-coated veneer-strips were lapped together and hot-pressed at 277 psi and 140°C for 5 minutes. Four two-ply wood composite panels were prepared with each adhesive. All two-ply wood composite panels were stored overnight at room temperature before the evaluation of their shear strength and water resistance. The results are shown in FIG. 6.

The dry shear strength and water resistance of wood composites bonded with the adhesive at 12 percent total solids content were comparable to those at 14 percent total solids content. When the total solids content increased from 14 percent to 16 percent, all shear strengths (dry shear strength, WSAD shear strength, BWT/dry shear strength, and BWT/wet shear strength) increased. However, upon a further increase in the total solids content from 16 percent to 18 percent, all shear strengths decreased.

### Example 9 - Effect of storage time

As shown in FIG. 7, the storage of a lignin/Kymene® 557H adhesive at room temperature for up to two days had little effect on the dry shear strength. However, the storage of the adhesive for five days, as compared for 2 days, decreased the dry shear strength.

Having illustrated and described the principles of the disclosed methods, compositions and composites with reference to several embodiments, it should be apparent that these methods, compositions and composites may be modified in arrangement and detail without departing from such principles.

## Claims

1. A substantially formaldehyde-free adhesive composition comprising a reaction product of:
soy flour; and
at least one substantially formaldehyde-free curing agent comprising a resin comprising an adduct of an epoxide with a polyamine resin, a polyamidoamine resin or a polyamide resin;
with the proviso that the following adhesive compositions are excluded:
an adhesive composition which is a reaction product of soy flour and Kymene 736, wherein the adhesive composition has:
i) a soy flour:Kymene 736 weight ratio of 5:1, 10:1, 20:1 or 30:1; and a total solids content of 16.7% by weight; or
ii) a soy flour:Kymene 736 weight ratio of 10:1; and a total solids content of 35% or 50% by weight.

2. The adhesive composition of claim 1, further comprising wheat flour.

3. The adhesive composition of claim 1 or 2, wherein the curing agent comprises an epichlorohydrin condensate of a polyalkylene polyamine.

4. The adhesive composition of claim 1 or 2, wherein the curing agent comprises an adduct of an epoxide with a polyamidoamine resin.

5. The adhesive composition of claim 1 or 2, wherein the curing agent comprises a reaction product of poly(adipic acid-co-diethylenetriamine) and epichlorohydrin.

6. The adhesive composition of claims 1, 2, 4 or 5, wherein the curing agent comprises the reaction product of poly(adipic acid-co-diethylenetriamine) and epichlorohydrin comprising a group of the formula:

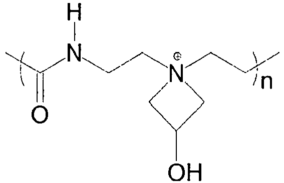

7. The adhesive composition of any one of claims 1 to 6, wherein the soy flour is mixed with the adduct, and the mix ratio of soy flour to the adduct is 1:1 to 1000:1.

8. The adhesive composition of any one of claims 1 to 6, wherein the soy flour is mixed with the adduct, and the mix ratio of soy flour to the adduct is 1:1 to 100:1.

9. The adhesive composition of any one of claims 1 to 8, wherein the adhesive composition has a solids content of about 20 to about 60 weight percent.

10. A method for making a lignocellulosic composite, comprising:
applying a substantially formaldehyde-free adhesive composition to at least one lignocellulosic substrate, the adhesive composition comprising a reaction product of (i) soy flour and (ii) at least one substantially formaldehyde-free curing agent comprising a resin comprising an adduct of an epoxide with a polyamine resin, a polyamidoamine resin or a polyamide resin; and
bonding the adhesive-applied lignocellulosic substrate to at least one other lignocellulosic substrate;
with the provisos that the method excludes making a two-ply composite prepared by bonding two maple veneers together using the following adhesive compositions:
an adhesive composition which is a reaction product of soy flour and Kymene 736, wherein the adhesive composition has:
i) a soy flour:Kymene 736 weight ratio of 5:1, 10:1, 20:1 or 30:1; and a total solids content of 16.7% by weight; or
ii) a soy flour:Kymene 736 weight ratio of 10:1; and a total solids content of 35% or 50% by weight.

11. The method of claim 10, wherein the curing agent comprises an adduct of an epoxide with a polyamidoamine resin.

12. The method of claim 10 or 11, wherein the curing agent comprises a reaction product of poly(adipic acid-co-diethylenetriamine) and epichlorohydrin.

13. The method of any of claims 10 to 12, wherein the curing agent comprises the reaction product of poly(adipic acid-co-diethylenetriamine) and epichlorohydrin comprising a group of the formula:

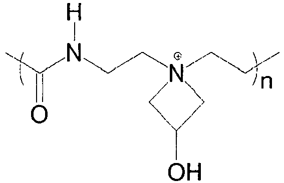

14. The method of any one of claims 10 through 13, wherein the bonding comprises applying heat and pressure to an assembly of the adhesive-applied lignocellulosic substrate and the other lignocellulosic substrate.

15. The method of any one of claims 10 through 14, wherein the lignocellulosic substrates comprise comminuted wood particles and the method comprises:
blending about 1 to about 12 weight percent of the adhesive composition with a mixture of the comminuted wood particles, the weight percent being based on the combined weight of the adhesive composition and the comminuted wood particles;
forming the adhesive/wood particle blend into a predetermined configuration; and
applying heat and pressure to the formed blend.

16. The method of any one of claims 10 through 14, wherein the lignocellulosic substrates comprise lignocellulosic veneer substrates and the method comprises:
applying the adhesive composition to at least one surface of the lignocellulosic veneer substrate;
forming an assembly of the adhesive-applied lignocellulosic veneer substrates; and applying heat and pressure to the assembly.

17. The method of any one of claims 10 through 14, wherein the lignocellulosic composite comprises a particleboard, oriented strand board, waferboard, fiberboard, parallel strand lumber, laminated strand lumber, plywood or laminated veneer lumber.

18. A composite comprising:
(a) at least two lignocellulosic substrates; and
(b) a substantially formaldehyde-free adhesive composition comprising a reaction product of (i) soy flour and (ii) at least one substantially formaldehyde-free curing agent comprising a resin comprising an adduct of an epoxide with a polyamine resin, a polyamidoamine resin or a polyamide resin, wherein the adhesive composition bonds the lignocellulosic substrates together;
with the proviso that the composite is not a two ply maple veneer which is two maple veneers bonded together with an adhesive composition which is a reaction product of soy flour and Kymene 736, wherein the adhesive composition has:
i) a soy flour:Kymene 736 weight ratio of 5:1, 10:1, 20:1 or 30:1; and a total solids content of 16.7% by weight; or
ii) a soy flour:Kymene 736 weight ratio of 10:1; and a total solids content of 35% or 50% by weight.

19. The composite of claim 18, wherein the curing agent comprises an adduct of an epoxide with a polyamidoamine resin.

20. The composite of claim 18 or 19, wherein the curing agent comprises a reaction product of poly(adipic acid-co-diethylenetriamine) and epichlorohydrin.

21. The composite of any of claims 18 to 20, the curing agent comprises the reaction product of poly(adipic acid-co-diethylenetriamine) and epichlorohydrin comprising a group of the formula:

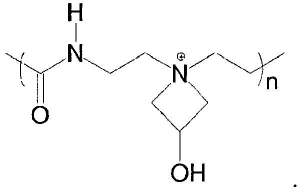

22. The composite of any one of claims 18 to 21, wherein the lignocellulosic substrates comprise comminuted lignocellulosic particles.

23. The composite of any one of claims 18 to 21, wherein the lignocellulosic substrates comprise lignocellulosic veneer substrates.

24. A method for making a substantially formaldehyde-free adhesive composition comprising:
mixing together (i) soy flour and (ii) at least one substantially formaldehyde-free curing agent comprising a resin comprising an adduct of an epoxide with a polyamine resin, a polyamidoamine resin or a polyamide resin; and
heating the resulting mixture to form a cured adhesive composition;
with the proviso that the following adhesive compositions are excluded from the method:
an adhesive composition which is a reaction product of soy flour and Kymene 736, wherein the adhesive composition has:
i) a soy flour:Kymene 736 weight ratio of 5:1, 10:1, 20:1 or 30:1; and a total solids content of 16.7% by weight; or
ii) a soy flour:Kymene 736 weight ratio of 10:1; and a total solids content of 35% or 50% by weight.

25. The method of claim 24, wherein the curing agent comprises an adduct of an epoxide with a polyamidoamine resin.

26. The method of claim 24 or 25, wherein the curing agent comprises a reaction product of poly(adipic acid-co-diethylenetriamine) and epichlorohydrin.

27. The method of any of claims 24 to 26, wherein the curing agent comprises the reaction product of poly(adipic acid-co-diethylenetriamine) and epichlorohydrin comprising a group of the formula:

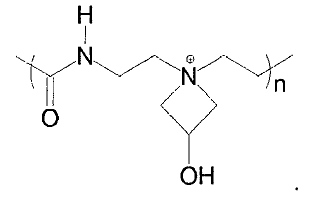

## Patentansprüche

1. Im Wesentlichen formaldehydfreie Klebstoffzusammensetzung, die ein Reaktionsprodukt umfasst aus:
Sojamehl; und
mindestens einen im Wesentlichen formaldehydfreien Härtemittel, das ein Harz umfasst, welches ein Addukt eines Epoxids mit einem Polyaminharz, einem Polyamidoaminharz oder einem Polyamidharz umfasst;
mit der Maßgabe, dass die folgenden Klebstoffzusammensetzungen ausgeschlossen sind:
eine Klebstoffzusammensetzung, die ein Reaktionsprodukt aus Sojamehl und Kymene 736 ist, wobei die Klebstoffzusammensetzung über Folgendes verfügt:
i) ein Gewichtsverhältnis des Sojamehls zu Kymene 736 von 5:1, 10:1, 20:1 oder 30:1 und einen Feststoffgesamtanteil von 16,7 Gew.-%; oder
ii) ein Gewichtsverhältnis des Sojamehls zu Kymene 736 von 10:1 und einen Feststoffgesamtanteil von 35 Gew.-% oder 50 Gew.-%.

2. Klebstoffzusammensetzung nach Anspruch 1, die ferner Weizenmehl umfasst.

3. Klebstoffzusammensetzung nach Anspruch 1 oder 2, wobei das Härtemittel ein Epichlorhydrinkondensat aus einem Polyalkylenpolyamin umfasst.

4. Klebstoffzusammensetzung nach Anspruch 1 oder 2, wobei das Härtemittel ein Addukt aus einem Epoxid mit einem Polyamidoaminharz umfasst.

5. Klebstoffzusammensetzung nach Anspruch 1 oder 2, wobei das Härtemittel ein Reaktionsprodukt aus Poly(Adipinsäure-Co-Diethylenetriamin) und Epichlorhydrin umfasst.

6. Klebstoffzusammensetzung nach Ansprüchen 1, 2, 4 oder 5, wobei das Härtemittel ein Reaktionsprodukt aus Poly(Adipinsäure-Co-Diethylenetriamin) und Epichlorhydrin umfasst, eine Gruppe der folgenden Formel umfassend:

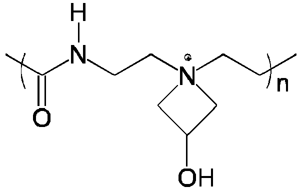

7. Klebstoffzusammensetzung nach einem der Ansprüche 1 bis 6, wobei das Sojamehl mit dem Addukt gemischt ist, und wobei das Mischungsverhältnis von Sojamehl zu dem Addukt zwischen 1:1 und 1000:1 liegt.

8. Klebstoffzusammensetzung nach einem der Ansprüche 1 bis 6, wobei das Sojamehl mit dem Addukt gemischt ist, und wobei das Mischungsverhältnis von Sojamehl zu dem Addukt zwischen 1:1 und 100:1 liegt.

9. Klebstoffzusammensetzung nach einem der Ansprüche 1 bis 8, wobei die Klebstoffzusammensetzung einen Feststoffanteil von etwa 20 bis etwa 60 Gewichtsprozent aufweist.

10. Verfahren zur Herstellung einer Lignocellulose-Zusammensetzung, wobei das Verfahren Folgendes umfasst:
das Auftragen einer im Wesentlichen formaldehydfreien Klebstoffzusammensetzung auf mindestens ein Lignocellulose-Substrat, wobei die Klebstoffzusammensetzung ein Reaktionsprodukt aus (i) Sojamehl und (ii) mindestens einem im Wesentlichen formaldehydfreien Härtemittel umfasst, das ein Harz umfasst, welches ein Addukt eines Epoxids mit einem Polyaminharz, einem Polyamidoaminharz oder einem Polyamidharz umfasst; und
das Verbinden des Lignocellulose-Substrats, auf das Klebstoff aufgetragen worden ist, mit mindestens einem anderen Lignocellulosesubstrat;
mit der Maßgabe, dass das Verfahren die Herstellung einer zweilagigen Zusammensetzung ausschließt, die durch das Verbinden zweier Ahornfurniere mit den folgenden Klebstoffzusammensetzungen hergestellt wird:
eine Klebstoffzusammensetzung, die ein Reaktionsprodukt aus Sojamehl und Kymene 736 ist, wobei die Klebstoffzusammensetzung über Folgendes verfügt:
i) ein Gewichtsverhältnis des Sojamehls zu Kymene 736 von 5:1, 10:1, 20:1 oder 30:1 und einen Feststoffgesamtanteil von 16,7 Gew.-%; oder
ii) ein Gewichtsverhältnis des Sojamehls zu Kymene 736 von 10:1 und einen Feststoffgesamtanteil von 35 Gew.-% oder 50 Gew.-%.

11. Verfahren nach Anspruch 10, wobei das Härtemittel ein Addukt aus einem Epoxid mit einem Polyamidoaminharz umfasst.

12. Verfahren nach Anspruch 10 oder 11, wobei das Härtemittel ein Reaktionsprodukt aus Poly(Adipinsäure-Co-Diethylenetriamin) und Epichlorhydrin umfasst.

13. Verfahren nach einem der Ansprüche 10 bis 12, wobei das Härtemittel ein Reaktionsprodukt aus Poly(Adipinsäure-Co-Diethylenetriamin) und Epichlorhydrin umfasst, eine Gruppe der folgenden Formel umfassend:

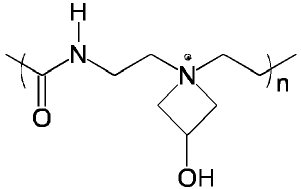

14. Verfahren nach einem der Ansprüche 10 bis 13, wobei das Verbinden das Anwenden von Hitze und Druck auf eine Einheit des Lignocellulose-Substrats, auf das Klebstoff aufgetragen worden ist, und des anderen Lignocellulose-Substrats umfasst.

15. Verfahren nach einem der Ansprüche 10 bis 14, wobei das Lignocellulose-Substrat zerkleinerte Holzpartikel umfasst, und wobei das Verfahren Folgendes umfasst:
das Mischen von etwa 1 bis etwa 12 Gewichtsprozent der Klebstoffzusammensetzung mit einem Gemisch der zerkleinerten Holzpartikel, wobei die Gewichtsprozent auf dem kombinierten Gewicht der Klebstoffzusammensetzung und der zerkleinerten Holzpartikel basieren;
das Gestalten des Klebstoff-Holzpartikel-Gemisches in eine vorbestimmte Konfiguration;
und das Anwenden von Hitze und Druck auf das gestaltete Gemisch.

16. Verfahren nach einem der Ansprüche 10 bis 14, wobei die Lignocellulose-Substrate Lignocellulose-Furniersubstrate umfassen, und wobei das Verfahren Folgendes umfasst:
das Auftragen der Klebstoffzusammensetzung auf mindestens eine Oberfläche des Lignocellulose- Furniersubstrats;
das Bilden einer Einheit des Lignocellulose-Furniersubstrats, auf das Klebstoff aufgetragen ist; und das Anwenden von Hitze und Druck auf die Einheit.

17. Verfahren nach einem der Ansprüche 10 bis 14, wobei die Lignocellulose-Zusammensetzung eine Spanplatte, eine OSB-platte, eine Waferboard-Platte, eine Faserplatte, Furnierstreifenholz, Spanstreifenholz, Sperrholz oder Furnierschichtholz umfasst.

18. Zusammensetzung, die Folgendes umfasst:
(a) mindestens zwei Lignocellulose-Substrate; und
(b) eine im Wesentlichen formaldehydfreie Klebstoffzusammensetzung, die ein Reaktionsprodukt umfasst aus (i) Sojamehl und (ii) mindestens einem im Wesentlichen formaldehydfreien Härtemittel, das ein Harz umfasst, welches ein Addukt eines Epoxids mit einem Polyaminharz, einem Polyamidoaminharz oder einem Polyamidharz umfasst, wobei die Klebstoffzusammensetzung die Lignocellulose-Substrate miteinander verbindet;
mit der Maßgabe, dass die Zusammensetzung kein zweilagiges Ahornfurnier ist, das aus zwei Ahornfurnieren besteht, die mit einer Klebstoffzusammensetzung verbunden werden, die ein Reaktionsprodukt aus Sojamehl und Kymene 736 ist, wobei die Klebstoffzusammensetzung über Folgendes verfügt:
i) ein Gewichtsverhältnis des Sojamehls zu Kymene 736 von 5:1, 10:1, 20:1 oder 30:1 und einen Feststoffgesamtanteil von 16,7 Gew.-%; oder
ii) ein Gewichtsverhältnis des Sojamehls zu Kymene 736 von 10:1 und einen Feststoffgesamtanteil von 35 Gew.-% oder 50 Gew.-%.

19. Zusammensetzung nach Anspruch 18, wobei das Härtemittel ein Addukt eines Epoxids mit einem Polyamidoaminharz umfasst.

20. Zusammensetzung nach Anspruch 18 oder 19, wobei das Härtemittel ein Reaktionsprodukt aus Poly (Adipinsäure-Co-Diethylenetriamin) und Epichlorhydrin umfasst.

21. Zusammensetzung nach einem der Ansprüche 18 bis 20, wobei das Härtemittel ein Reaktionsprodukt aus Poly(Adipinsäure-Co-Diethylenetriamin) und Epichlorhydrin umfasst, eine Gruppe der folgenden Formel umfassend:

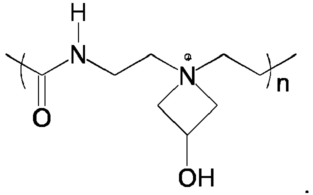

22. Zusammensetzung nach einem der Ansprüche 18 bis 21, wobei die Lignocellulose-Substrate zerkleinerte Lignocellulose-Partikel umfassen.

23. Zusammensetzung nach einem der Ansprüche 18 bis 21, wobei die Lignocellulose-Substrate Lignocellulose- Furniersubstrate umfassen.

24. Verfahren zur Herstellung einer im Wesentlichen formaldehydfreien Klebstoffzusammensetzung, wobei das Verfahren Folgendes umfasst:
das Vermischen von (i) Sojamehl und (ii) mindestens einem im Wesentlichen formaldehydfreien Härtemittel, das ein Harz umfasst, welches ein Addukt eines Epoxids mit einem Polyaminharz, einem Polyamidoaminharz oder einem Polyamidharz umfasst; und
das Erhitzen des resultierenden Gemischs, so dass eine gehärtete Klebstoffzusammensetzung gebildet wird;
mit der Maßgabe, dass die folgenden Klebstoffzusammensetzungen aus dem Verfahren ausgeschlossen sind:
eine Klebstoffzusammensetzung, die ein Reaktionsprodukt aus Sojamehl und Kymene 736 ist, wobei die Klebstoffzusammensetzung über Folgendes verfügt:
i) ein Gewichtsverhältnis des Sojamehls zu Kymene 736 von 5:1, 10:1, 20:1 oder 30:1 und einen Feststoffgesamtanteil von 16,7 Gew.-%; oder
ii) ein Gewichtsverhältnis des Sojamehls zu Kymene 736 von 10:1 und einen Feststoffgesamtanteil von 35 Gew.-% oder 50 Gew.-%.

25. Verfahren nach Anspruch 24, wobei das Härtemittel ein Addukt aus einem Epoxid mit einem Polyamidoaminharz umfasst.

26. Verfahren nach Anspruch 24 oder 25, wobei das Härtemittel ein Reaktionsprodukt aus Poly(Adipinsäure-Co-Diethylenetriamin) und Epichlorhydrin umfasst.

27. Verfahren nach einem der Ansprüche 24 bis 26, wobei das Härtemittel ein Reaktionsprodukt aus Poly(Adipinsäure-Co-Diethylenetriamin) und Epichlorhydrin umfasst, eine Gruppe der folgenden Formel umfassend:

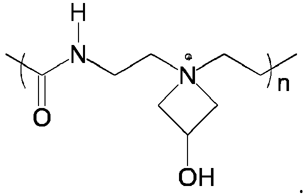

## Revendications

1. Composition adhésive essentiellement exempte de formaldéhyde comprenant un produit de réaction constitué de :
farine de soja ; et
au moins un agent de durcissement essentiellement exempt de formaldéhyde comprenant une résine comprenant un produit d'addition d'un époxyde avec une résine de polyamine, une résine de polyamidoamine ou une résine de polyamide ;
à condition que les compositions adhésives soient exclues :
une composition adhésive qui est un produit de réaction de la farine de soja et de Kymene 736, la composition adhésive contient :
i) un rapport pondéral farine de soja/Kymene 736 de 5:1, 10:1, 20:1 ou 30:1 ; et une teneur totale en solide de 16,7% en poids ; ou
ii) un rapport pondéral farine de soja/Kymene 736 de 10:1 ; et une teneur totale en solide de 35% ou 50% en poids.

2. Composition adhésive selon la revendication 1, comprenant en outre de la farine de blé.

3. Composition adhésive selon la revendication 1 ou 2, dans laquelle l'agent de durcissement comprend un condensat d'épichlorohydrine d'une polyalkylènepolyamine.

4. Composition adhésive selon la revendication 1 ou 2, dans laquelle l'agent de durcissement comprend un produit d'addition d'un époxyde avec une résine de polyamidoamine.

5. Composition adhésive selon la revendication 1 ou 2, dans laquelle l'agent de durcissement comprend un produit de réaction d'acide poly(adipique-co-diéthylènetriamine) et d'épichlorohydrine.

6. Composition adhésive selon la revendication 1 ou 5, dans laquelle l'agent de durcissement comprend un produit de réaction d'acide poly(adipique-co-diéthylènetriamine) et d'épichlorohydrine comprenant un groupe de la formule :

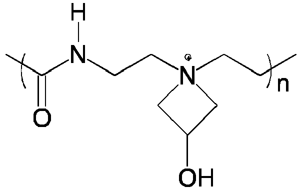

7. Composition adhésive selon l'une quelconque des revendications 1 à 6, où l'on mélange la farine de soja avec le produit d'addition, et le rapport de mélange de la farine de soja au produit d'addition est de 1:1 à 1000:1.

8. Composition adhésive selon l'une quelconque des revendications 1 à 6, où l'on mélange la farine de soja avec le produit d'addition, et le rapport de mélange de la farine de soja au produit d'addition est de 1:1 à 100:1.

9. Composition adhésive selon l'une quelconque des revendications 1 à 8, où la composition adhésive a une teneur en solides d'environ 20 à environ 60 pour cent par poids.

10. Procédé de fabrication d'un composite lignocellulosique, comprenant :
l'application d'une composition adhésive essentiellement exempte de formaldéhyde à au moins un substrat lignocellulosique, la composition adhésive comprenant un produit de réaction constitué de (i) farine de soja et (ii) d'au moins un agent de durcissement essentiellement exempt de formaldéhyde comprenant une résine comprenant un produit d'addition d'un époxyde avec une résine de polyamine, une résine de polyamidoamine ou une résine de polyamide ; et
le collage du substrat lignocellulosique sur lequel l'adhésif a été appliqué sur au moins un autre substrat lignocellulosique ;
à condition que le procédé exclut la fabrication d'un composite à deux couches obtenu par collage de deux placages d'érable en utilisant les compositions adhésives suivantes :
une composition adhésive qui est un produit de réaction de la farine de soja et de Kymene 736, où la composition adhésive contient :
i) un rapport pondéral farine de soja/Kymene 736 de 5:1, 10:1, 20:1 ou 30:1 ; et une teneur totale en solide 16,7% en poids ; ou
ii) un rapport pondéral farine de soja/Kymene 736 de 10:1 ; et une teneur totale en solide de 35% ou 50% en poids.

11. Procédé selon la revendication 10, dans lequel l'agent de durcissement comprend un produit d'addition d'un époxyde avec une résine de polyamidoamine.

12. Procédé selon la revendication 10 ou 11, dans lequel l'agent de durcissement comprend un produit de réaction d'acide poly(adipique-co-diéthylènetriamine) et d'épichlorohydrine.

13. Procédé selon l'une des revendications 10 ou 12, dans lequel l'agent de durcissement comprend le produit de réaction d'acide poly(adipique-co-diéthylènetriamine) et d'épichlorohydrine comprenant un groupe de la formule :

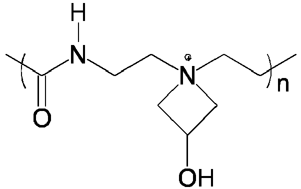

14. Procédé selon l'une quelconque des revendications 10 à 13, dans lequel le collage comprend l'application de chaleur et de pression à un ensemble du substrat lignocellulosique sur lequel l'adhésif a été appliqué et de l'autre substrat lignocellulosique

15. Procédé selon l'une quelconque des revendications 10 à 14, dans lequel les substrats lignocellulosiques comprennent des particules de bois broyé et le procédé comprend :
le mélange d'environ 1 à environ 12 pour cent en poids de la composition adhésive à un mélange des particules de bois broyé, le pourcentage en poids étant fondé sur le poids combiné de la composition adhésive et des particules de bois broyé ;
la formation du mélange d'adhésif/particule de bois en une configuration prédéterminée ; et
l'application de chaleur et de pression au mélange formé.

16. Procédé selon l'une quelconque des revendications 10 à 14, dans lequel les substrats lignocellulosiques comprennent des substrats en placage lignocellulosique et le procédé comprend :
l'application de la composition adhésive à au moins une surface du substrat en placage lignocellulosique ;
la formation d'un ensemble des substrats en placage lignocellulosique sur lesquels l'adhésif a été appliqué ; et l'application de chaleur et de pression à l'ensemble.

17. Procédé selon l'une quelconque des revendications 10 à 14, dans lequel le composite lignocellulosique comprend un panneau de particules, panneau de grandes particules orientées, panneau de grandes particules, panneau de fibres, du bois de construction à copeaux longs parallèles, du bois de construction à copeaux longs laminés, du contreplaqué ou du bois de construction à placage stratifié.

18. Composite comprenant :
(a) au moins deux substrats lignocellulosiques ; et
(b) une composition adhésive essentiellement exempte de formaldéhyde comprenant un produit de réaction constitué de (i) farine de soja et (ii) d'au moins un agent de durcissement essentiellement exempt de formaldéhyde comprenant une résine comprenant un produit d'addition d'un époxyde avec une résine de polyamine, une résine de polyamidoamine ou une résine de polyamide, dans laquelle la composition adhésive colle les substrats lignocellulosiquess ensemble ;
à condition que le composite ne soit pas un placage d'érable à deux couches, consistant en deux placages d'érable collés ensemble par une composition adhésive qui est un produit de réaction de la farine de soja et de Kymene 736, la composition adhésive présentant :
i) un rapport pondéral farine de soja/Kymene 736 de 5:1, 10:1, 20:1 ou 30:1 ; et une teneur totale en solide 16,7% en poids ; ou
ii) un rapport pondéral farine de soja/Kymene 736 de 10:1 ; et une teneur totale en solide de 35% ou 50% en poids.

19. Composite selon la revendication 18, dans lequel l'agent de durcissement comprend un produit d'addition d'un époxyde avec une résine de polyamidoamine.

20. Composite selon la revendication 18 ou 19, dans lequel l'agent de durcissement comprend un produit de réaction d'acide poly(adipique-co-diéthylènetriamine) et d'épichlorohydrine.

21. Composite selon l'une des revendications 18 à 20, dans lequel l'agent de durcissement comprend le produit de réaction d'acide poly(adipique-co-diéthylènetriamine) et d'épichlorohydrine comprenant un groupe de la formule :

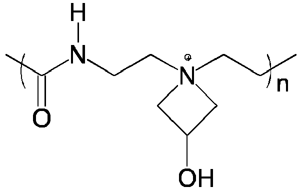

22. Composite selon l'une quelconque des revendications 18 à 21, dans lequel les substrats lignocellulosiques comprennent des particules lignocellulosiques broyées.

23. Composite selon l'une quelconque des revendications 18 à 21, dans lequel les substrats lignocellulosiques comprennent des substrats en placage lignocellulosique.

24. Procédé de fabrication d'une composition adhésive essentiellement exempte de formaldéhyde comprenant :
le mélange de (i) farine de soja et (ii) d'au moins un agent de durcissement essentiellement exempt de formaldéhyde comprenant une résine comprenant un produit d'addition d'un époxyde avec une résine de polyamine, une résine de polyamidoamine ou une résine de polyamide ; et
le chauffage du mélange résultant pour former une composition adhésive durcie ;
à condition que les compositions adhésives suivantes soient exclues du procédé :
une composition adhésive qui est un produit de réaction de la farine de soja et de Kymene 736, où la composition adhésive contient :
i) un rapport pondéral farine de soja/Kymene 736 de 5:1, 10:1, 20:1 ou 30:1 ; et une teneur totale en solide 16,7% en poids ; ou
ii) un rapport pondéral farine de soja/Kymene 736 de 10:1 ; et une teneur totale en solide de 35% ou 50% en poids.

25. Procédé selon la revendication 24, dans lequel l'agent de durcissement comprend un produit d'addition d'un époxyde avec une résine de polyamidoamine.

26. Procédé selon la revendication 24 ou 25, dans lequel l'agent de durcissement comprend un produit de réaction d'acide poly(adipique-co-diéthylènetriamine) et d'épichlorohydrine.

27. Procédé selon l'une des revendications 24 ou 26, dans lequel l'agent de durcissement comprend le produit de réaction d'acide poly(adipique-co-diéthylènetriamine) et d'épichlorohydrine comprenant un groupe de la formule :
